# EUROPÄISCHE PATENTANMELDUNG

(11) **EP 1 553 674 A2**
(43) Veröffentlichungstag der Anmeldung: **13.07.2005**
(21) Anmeldenummer: 04029539.6
(22) Anmeldetag: 14.12.2004
(51) Int. Cl.: H02G 3/12

(54) **Unterputzdose**

(30) Priorität: 15.12.2003 DE 10359004
(71) Anmelder: Wetzstein, Konrad, 86502 Laugna/Osterbuch (DE); Kempter, Anton, 89361 Landensberg (DE)
(72) Erfinder: Wetzstein, Konrad, 86502 Laugna/Osterbuch (DE); Kempter, Anton, 89361 Landensberg (DE)
(74) Vertreter: Repkow, Ines, Dr. Dipl.-Ing.

(57) **Zusammenfassung**

Es wird eine Unterputzdose für die Elektroinstallation beschrieben, mit einem von vorne zugänglichen Hohlraum, in welchen von der Seite oder von hinten unter Putz verlegte elektrische Leitungen hineinführbar sind. Die beschriebene Unterputzdose zeichnet sich dadurch aus, daß neben und/oder hinter dem Hohlraum ein zweiter Hohlraum vorgesehen ist, welcher derart angeordnet und bemessen ist, daß die in den ersten Hohlraum zu führenden elektrischen Leitungen zumindest teilweise über den zweiten Hohlraum in den ersten Hohlraum führbar sind.

## Beschreibung

Die vorliegende Erfindung betrifft eine Vorrichtung gemäß dem Oberbegriff des Patentanspruchs 1, d.h. eine Unterputzdose für die Elektroinstallation, mit einem von vorne zugänglichen Hohlraum, in welchen von der Seite oder von hinten unter Putz verlegte elektrische Leitungen hineinführbar sind.

Solche Unterputzdosen werden beispielsweise, aber nicht ausschließlich für den Einbau elektrischer Einrichtungen wie beispielsweise für den Einbau von Schaltern, Steckdosen, Telefonanschlußbuchsen, Antennenanschlußbuchsen etc., oder für den Anschluß von elektrischen Verbrauchern wie Lampen, Ventilatoren etc. ans Stromnetz, oder als Zugang zu unter Putz verlegten elektrischen Leitungen verwendet, und werden häufig auch als Verteilerdosen, Abzweigdosen, Kabeldosen, Schalterdosen, Anschlußdosen, Geräteeinbaudosen, Wandauslaßdosen, Leuchtenanschlußdosen etc. bezeichnet.

Die besagten Unterputzdosen sind in den unterschiedlichsten Formen und Größen erhältlich. Meistens weisen sie jedoch eine zylindrische oder quaderförmige Form auf. Insbesondere die quaderförmigen Unterputzdosen werden manchmal auch als Unterputzkästen bezeichnet. Zur Vermeidung von Mißverständnissen sei darauf hingewiesen, daß unter dem vorliegend verwendeten Begriff "Unterputzdose" auch die als Unterputzkästen bezeichneten Vorrichtungen verstanden werden sollen.

Eine Unterputzdose der vorstehend genannten Art ist beispielsweise die Geräte-Verbindungsdose mit der Artikelnummer 1555-02 der Kaiser GmbH & Co. KG, Ramsloh 4, D-58579 Schalksmühle.

Die Erfahrung zeigt, daß über solche Unterputzdosen Kaltluft in das Gebäudeinnere gelangen kann. Bei Verwendung solcher Unterputzdosen ist es daher schwierig, und teilweise sogar unmöglich, die immer strengeren gesetzlichen Vorschriften, beispielsweise die deutsche Energieeinsparverordnung (EnEV) in Bezug auf die Wärmedämmung und die Luftdichtheit zu erfüllen.

Der vorliegenden Erfindung liegt daher die Aufgabe zugrunde, die Unterputzdose gemäß dem Oberbegriff des Patentanspruchs 1 derart weiterzubilden, daß über die Unterputzdose weniger Kälte und Luft ins Gebäudeinnere gelangen kann als es bisher der Fall ist.

Diese Aufgabe wird erfindungsgemäß durch die in Patentanspruch 1 beanspruchte Unterputzdose gelöst.

Die erfindungsgemäße Unterputzdose zeichnet sich dadurch aus, daß neben und/oder hinter dem Hohlraum ein zweiter Hohlraum vorgesehen ist, welcher derart angeordnet und bemessen ist, daß die in den ersten Hohlraum zu führenden elektrischen Leitungen zumindest teilweise über den zweiten Hohlraum in den ersten Hohlraum führbar sind

Insbesondere wenn die Öffnung, über welche die elektrischen Leitungen vom zweiten Hohlraum in den ersten Hohlraum geführt werden, nur etwa so groß ist wie die Leitungen, die durch diese Öffnung geführt werden, und/oder wenn der zweite Hohlraum mit wärmedämmendem Material gefüllt ist, kann weniger Kälte und Luft in den ersten Hohlraum und von dort weiter ins Gebäudeinnere gelangen als es bisher der Fall ist.

Vorteilhafte Weiterbildungen der Erfindung sind den Unteransprüchen, der folgenden Beschreibung, und den Figuren entnehmbar.

Die Erfindung wird nachfolgend anhand eines Ausführungsbeispiels unter Bezugnahme auf die Figuren näher erläutert. Es zeigen
- Figur 1: eine perspektivische Ansicht der im folgenden beschriebenen Unterputzdose,
- Figur 2: eine perspektivische Ansicht einer der zwei identisch aufgebauten Hälften, aus welchen die Unterputzdose gemäß Figur 1 zusammengesetzt ist,
- Figur 3A: eine Ansicht der in den Figuren 1 und 2 gezeigten Unterputzdose von oben,
- Figur 3B: eine Seitenansicht der in der Figur 3A gezeigten Unterputzdose,
- Figur 3C: eine Ansicht der in der Figur 3A gezeigten Unterputzdose von unten, und
- Figur 4: eine Seitenansicht einer in einen Rolladenkasten eingebauten Unterputzdose gemäß den Figuren 1 bis 3.

Zur Vermeidung von Mißverständnissen sei an dieser Stelle nochmals darauf hingewiesen, daß unter dem vorliegend verwendeten Begriff "Unterputzdose" auch die teilweise mit dem Begriff "Unterputzkasten" bezeichneten Vorrichtungen verstanden werden sollen.

Die im folgenden beschriebene Unterputzdose ist zur Montage in einen Rolladenkasten ausgelegt. Der Einsatz von Unterputzdosen der beschriebenen Art ist jedoch nicht auf den Einbau in Rolladenkästen beschränkt. Die hier vorgestellte Unterputzdose läßt sich auch in "normale" Wände einbauen, wobei es sich bei zum Einbau in normale Wände vorgesehenen Unterputzdosen als vorteilhaft erweisen kann, die Form, die Größe und den Aufbau der Unterputzdose an die veränderten Verhältnisse anzupassen.

Die in den Figuren gezeigte Unterputzdose ist dort mit dem Bezugszeichen 1 bezeichnet.

Die Unterputzdose 1 besteht im betrachteten Beispiel aus Kunststoff und wird im Spritzgußverfahren hergestellt. Hierauf besteht jedoch keine Einschränkung. Die Unterputzdose könnte auch auf eine beliebige andere Art und Weise hergestellt werden, und auch aus einem beliebigen anderen Material hergestellt werden.

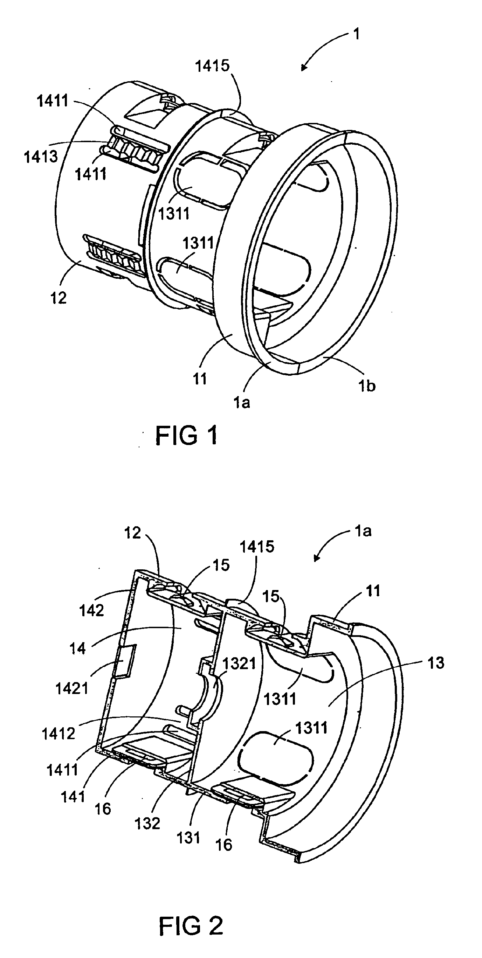

Die Unterputzdose ist aus zwei identisch aufgebauten Hälften 1a und 1b zusammengesetzt. Eine dieser Hälften, genauer gesagt die Hälfte 1a ist in Figur 2 gezeigt. Die beiden Hälften 1a, 1b weisen durch Rastnasen 15 und Rastvertiefungen oder Rastöffnungen 16 gebildete Rastelemente auf, die beim Zusammensetzen der beiden Hälften ineinander einrasten und die beiden Hälften zusammenhalten.

Die Unterputzdose 1 weist eine zylindrische Form mit unterschiedlichen Durchmessern auf. Genauer gesagt ist es so, daß die Unterputzdose einen vorderen Abschnitt 11 und einen hinteren Abschnitt 12 aufweist, wobei der vordere Abschnitt 11 derjenige Abschnitt der Unterputzdose ist, der im in den Rolladenkasten eingebauten Zustand außerhalb des Rolladenkastens zu liegen kommt, und wobei der vordere Abschnitt 11 einen größeren Durchmesser aufweist als der hintere Abschnitt 12.

Der Außendurchmesser des hinteren Abschnittes 12 beträgt im betrachteten Beispiel ca. 5 cm, und der Außendurchmesser des vorderen Abschnittes 11 ca. 6 cm. Allerdings besteht hierauf keine Einschränkung. Die genannten Durchmesser können unabhängig voneinander beliebig groß sein. Die Durchmesser des vorderen Abschnittes 11 und des hinteren Abschnittes 12 können auch gleich groß sein, und es könnte auch der hintere Abschnitt 12 den größeren Durchmesser haben.

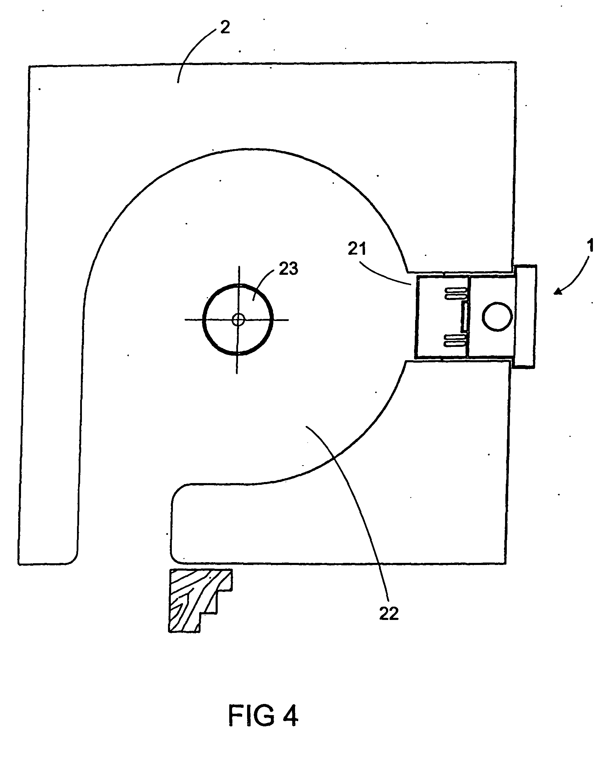

Die Unterputzdose 1 wird, wie in der Figur 4 veranschaulicht ist, in einen Rolladenkasten 2, genauer gesagt in eine darin vorgesehene Öffnung 21 eingesetzt. Die Richtung, in welche die Unterputzdose 1 bewegt werden muß, um in die Öffnung 21 eingesetzt zu werden, wird im folgenden als Einsteckrichtung bezeichnet. Im bestimmungsgemäß in die Öffnung 21 eingesetzten Zustand der Unterputzdose kommt der hintere Abschnitt 12 in der Öffnung 21 zu liegen, und schlägt der vordere Abschnitt 11 von außen an den Rolladenkasten 2 an. Die Länge des hinteren Abschnittes 12 ist vorzugsweise so bemessen, daß dieser nicht in den im Rolladenkasten 2 befindlichen Hohlraum 22 hineinragt, in welchem sich unter anderem der (in der Figur nicht gezeigte) Rolladen und eine Welle 23, um welche der Rolladen gewickelt ist, befinden. Die Länge des vorderen Abschnittes 11 entspricht vorzugsweise etwa der Dicke der Putzschicht, die auf den Rolladenkasten und den diese enthaltende Wand aufgebracht wird.

Der Durchmesser des vorderen Abschnittes 11 entspricht etwa dem Durchmesser von herkömmlichen zylindrischen Unterputzdosen. Dadurch ist es möglich, für herkömmliche Unterputzdosen hergestellte Zubehörteile wie beispielsweise Deckel zum Verschließen der vorne offenen Unterputzdosen auch für die hier vorgestellte Unterputzdose zu verwenden.

Der Durchmesser des hinteren Abschnittes 12 entspricht ungefähr dem Innendurchmesser der Öffnung 21. Die Öffnung 21 ist im allgemeinen eine vorgefertigte Öffnung im Rolladenkasten. Die im Handel erhältlichen Rolladenkästen weisen an ihrer Vorderseite meistens bereits zwei solche Öffnungen auf. Von diesen Öffnungen wird eine Öffnung verwendet, um darin eine Gurtführungsvorrichtung zu montieren, über welche der zum Hochziehen und Herunterlassen des Rolladen dienenden Gurt in den Hohlraum 22 des Rolladenkastens, genauer gesagt zu einer an der Welle 23 angebrachten (in der Figur nicht gezeigten) Wickelscheibe geführt wird. Zwei solche Öffnungen werden vorgesehen, weil es bei der Herstellung des Rolladenkastens nicht bekannt ist, ob der Rolladengurt und damit auch die Gurtführungsvorrichtung links oder rechts von dem Fenster vorgesehen werden, über welchem der Rolladenkasten angebracht ist.

Von den zwei Öffnungen 21 im Rolladenkasten 2 wird jedoch nur eine Öffnung 21 für den Einbau der Gurtführungsvorrichtung benötigt. Die andere Öffnung 21 wurde bisher nicht anderweitig verwendet und einfach zugemauert. Die hier vorgestellte Unterputzdose ermöglicht es jedoch, diese Öffnung 21 für die Einführung von elektrischen Leitungen in den Hohlraum 21 des Rolladenkastens 2 zu verwenden. Die elektrischen Leitungen können beispielsweise zur Stromversorgung eines nachträglich eingebauten Elektromotors zum Heraufziehen und Herunterlassen des Rolladens verwendet werden, oder zum Anschluß von am darunter liegenden Fenster vorgesehenen Einbruchsmeldesensoren.

Wie im folgenden näher beschrieben wird, handelt es sich bei der hier vorgestellten Unterputzdose um eine Unterputzdose, die zudem besonders gute Wärmeisolationseigenschaften aufweist und keinen oder einen sehr viel geringeren Luftaustausch zwischen dem Hohlraum 22 und dem Gebäude-Inneren zuläßt als es bei der Verwendung herkömmlicher Unterputzdosen der Fall wäre.

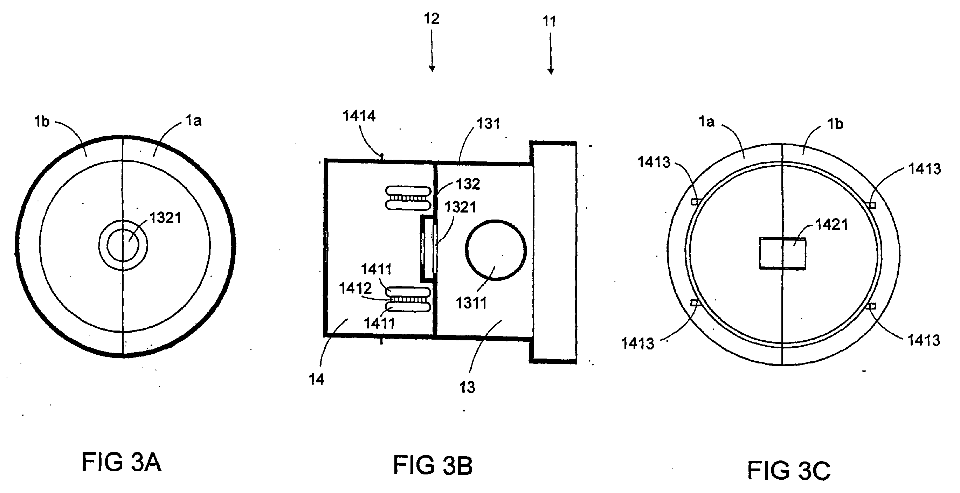

Wie insbesondere aus den Figuren 2 und 3B ersichtlich ist, weist die Unterputzdose zwei hintereinander liegende Hohlräume auf, nämlich einen vorne liegenden ersten Hohlraum 13 und einen dahinter liegenden zweiten Hohlraum 14.

Der erste Hohlraum 13 weist eine seitliche Begrenzungswand 131 und einen Boden 132 auf, und ist nach vorne hin offen; die offene Vorderseite des ersten Hohlraumes 13 ist durch einen in den Figuren nicht gezeigten aufsteckbaren oder aufschraubbaren Deckel verschließbar.

Die seitliche Begrenzungswand 131 weist mehrere aus der Begrenzungswand herausbrechbare Elemente 1311 auf. Bricht man eines oder mehrere dieser Elemente heraus, entstehen in der Begrenzungswand 131 Öffnungen, über welche von außerhalb der Unterputzdose 1 elektrische Leitungen in den ersten Hohlraum 13 geführt werden können.

Der Boden 132 weist eine Öffnung 1321 auf, über welche der erste Hohlraum 13 mit dem zweiten Hohlraum 14 in Verbindung steht. Diese Öffnung 1321 hat eine Doppelfunktion: über diese Öffnung 1321 kann der zweite Hohlraum 14 mit einem wärmeisolierenden Material befüllt werden, und über diese Öffnung können auch elektrische Leitungen vom ersten Hohlraum 13 in den zweiten Hohlraum 14 geführt werden. Dies wird später noch genauer beschrieben.

Der zweite Hohlraum 14 weist eine seitliche Begrenzungswand 141, einen Boden 142 und eine durch den Boden 132 des ersten Hohlraumes 13 gebildete vordere Begrenzungswand auf.

Die seitliche Begrenzungswand 141 weist in Einsteckrichtung verlaufende Schlitze 1411 auf. Genauer gesagt handelt es sich um mit geringem gegenseitigem Abstand parallel zueinander verlaufende Paare von Schlitzen 1411. Es sei bereits an dieser Stelle darauf hingewiesen, daß die Schlitze auch beliebig anders angeordnet sein können, und daß anstelle von Schlitzen auch anders geformte Öffnungen in der seitlichen Begrenzungswand vorgesehen sein können.

Zwischen den Schlitzen 1411 eines jeweiligen Schlitz-Paares bleibt jeweils ein Steg 1412 stehen, der an seiner Außenseite mit Vorsprüngen 1413 versehen ist. Diese Vorsprünge 1413 werden, wie insbesondere aus der Figur 1 ersichtlich ist, im betrachteten Beispiel durch quer zur Einsteckrichtung verlaufende und bezüglich der Einsteckrichtung hintereinander angeordnete Rippen gebildet. Die Rippen 1413 weisen vorzugsweise eine flach ansteigende hintere Flanke und eine steil abfallende oder die jeweilige Rippe hinterschneidende vordere Flanke auf. Die seitlichen Flanken der Rippen 1413 verlaufen, wie insbesondere aus der Figur 3C ersichtlich ist, parallel zu der Richtung, in welcher die beiden Hälften 1a, 1b, aus welchen die Unterputzdose zusammengesetzt ist, beim Zusammensetzen der Hälften zueinander hin bewegt werden müssen. Vorzugsweise sind die Rippen 1413 unterschiedlich hoch, und zwar derart, daß die am vorderen und hinteren Ende der Stege 1412 vorgesehenen Rippen am niedrigsten sind, und die Rippen um so höher werden, je weiter sie in der Mitte der Stege liegen. Die Rippen 1413 ragen von der seitlichen Begrenzungswand 141 empor, so daß der maximale äußere Durchmesser des hinteren Abschnittes 12 der Unterputzdose durch die Höhe der Rippen 1413 bestimmt wird. Der maximale äußere Durchmesser des hinteren Abschnittes ist vorzugsweise größer als der Innendurchmesser der Öffnung 21, in welche die Unterputzdose eingesetzt wird. Der Außendurchmesser der seitlichen Begrenzungswände 131 und 141 (ohne die Rippen 1413 ist vorzugsweise etwas keiner als der Innendurchmesser der Öffnung 21. Wie später noch genauer erläutert werden wird, verkeilen sich die Rippen 1413 im in die Öffnung 21 eingesetzten Zustand mit dem die Öffnung 21 umgebenden Rolladenkastenabschnitt, und wirken die Rippen 1413 wie Widerhaken, die sowohl ein Herausziehen der Unterputzdose als auch ein Drehen der Unterputzdose um ihre Längsachse verhindern. Es dürfte einleuchten und bedarf keiner näheren Erläuterung, daß die auf den Stegen 1412 vorgesehenen Vorsprünge 1413 nicht durch die vorstehend beschriebenen Rippen gebildet werden müssen. Wie die beschriebenen Rippen wirkende Vorsprünge können auch beliebig anders realisiert werden, beispielsweise durch spitz zulaufende Stifte.

Zwischen den Schlitzen 1411 und dem hinteren Ende der Unterputzdose (siehe Figur 3B), oder zwischen den Schlitzen 1411 und dem vorderen Ende der Unterputzdose (siehe Figuren 1 und 2 ist außen an der seitlichen Begrenzungswand 131 oder 141 eine die Unterputzdose 1 umlaufende Dichtlippe 1414 bzw. 1415 vorgesehen.

Der Boden 142 weist ein leicht zu durchdringende Schwachstelle oder ein herausbrechbares Element 1421 auf. Durchstößt oder durchbohrt man diese Schwachstelle, oder bricht man das herausbrechbare Element heraus, entsteht im Boden 142 eine Öffnung, durch welche elektrische Leitungen hindurchgeführt werden können.

Von der in der vorderen Begrenzungswand 132 vorgesehenen Öffnung 1321 ragt eine Tülle in den zweiten Hohlraum 14 hinein.

Es sei nun angenommen, daß die Unterputzdose 1 dazu verwendet werden soll, eine an einer Gebäudeinnenwand unter Putz verlegte elektrische Leitung in den Hohlraum 22 des Rolladenkastens 2 zu führen.

Dies läßt sich dadurch bewerkstelligen,
- daß die Unterputzdose 1 in die Öffnung 21 des Rolladenkastens 2 eingesetzt wird,
- daß die in den Hohlraum 22 zu führende Leitung so verlegt wird, daß sie über eine Öffnung, die durch ein Herausbrechen eines Elementes 1311 aus der Begrenzungswand 131 des ersten Hohlraumes 13 entsteht, in den ersten Hohlraum 13 geführt werden kann,
- daß der zweite Hohlraum 14 mit einem wärmedämmenden Material befüllt wird,
- daß ein das wärmedämmende Material und den Boden 142 (die Schwachstelle 1421 desselben) durchlaufender Kanal gebildet wird, über welchen die elektrische Leitung durch den zweiten Hohlraum 14 führbar ist, und
- daß die in den ersten Hohlraum 13 geführte Leitung über die im Boden 132 des ersten Hohlraumes 13 vorgesehene Öffnung 1321, die von dort in den zweiten Hohlraum 14 ragende Tülle, und den den zweiten Hohlraum 14 durchlaufenden Kanal in den Hohlraum 22 des Rolladenkastens 2 geführt wird. Zur Montage der Unterputzdose 1 wird diese in die Öffnung 21 des Rolladenkastens 2 gesteckt. Dabei kommen die hinteren Flanken der Rippen 1413 mit dem die Öffnung 21 umgebenden Rolladenkastenabschnitt in Berührung. Da der durch die Höhe der Rippen 1413 bestimmte maximale Außendurchmesser des hinteren Anschnittes 12 der Unterputzdose größer ist als der Innendurchmesser der Öffnung 21, werden die Rippen 1413 zusammen mit den diese tragenden Stegen 1412 in den zweiten Hohlraum 14 gedrückt. Dies ist möglich, weil die dünnen Stege 1412 relativ zum Rest der Unterputzdose 1 elastisch bewegbar sind. Insbesondere dann, wenn die Stege nicht oder nicht in dem erforderlichen Umfang bewegt werden können, kann alternativ oder zusätzlich vorgesehen werden, daß die Rippen 1413 elastisch zusammendrückbar ausgebildet sind. Das Wegdrücken der Rippen 1413 hat den positiven Effekt, daß die Unterputzdose weiter in die Öffnung 21 hineingeschoben werden kann. Das Hineinschieben der Unterputzdose 1 in die Öffnung 21 läßt sich mit einem verhältnismäßig geringen Kraftaufwand bewerkstelligen. Zwar drücken die Rippen 1413 gegen die die Öffnung 21 umgebenden Rolladenkastenabschnitte, doch sind die hinteren Flanken der Rippen relativ flach, so daß die Rippen an den die Öffnung 21 umgebenden Rolladenkastenabschnitten entlanggleiten können. Die Unterputzdose wird bis zum Anschlag des vorderen Abschnittes 11 der Unterputzdose am Rolladenkasten in die Öffnung 21 eingeschoben. Die dann von der Unterputzdose eingenommene Stellung ist in der Figur 4 gezeigt. Die Unterputzdose sitzt in diesem Zustand fest in der Öffnung 21 und muß nicht weiter befestigt werden. Die Unterputzdose kann ohne eine weitere Befestigung weder aus der Öffnung 21 herausgezogen werden noch um ihre Längsachse gedreht werden. Dies wird durch die für diese Art von Bewegung wie Widerhaken wirkenden Rippen 1413 verhindert.

Anschließend wird der zweite Hohlraum 14 mit einem wärmedämmenden Material gefüllt. Als wärmedämmendes Material wird im betrachteten Beispiel ein aushärtender Schaum verwendet, beispielsweise ein PU-Schaum oder ein PUR-Schaum. Dieser Schaum wird durch ein Rohr oder einen Schlauch, welches bzw. welcher über die im Boden 132 vorgesehene Öffnung 1321 und über die in den zweiten Hohlraum 14 ragende Tülle in den zweiten Hohlraum geschoben wird, in den zweiten Hohlraum eingefüllt. Die Öffnung 1321 und die Tülle dienen hierbei als eine Schaumeinfüllöffnung. Der Schaum füllt den zweiten Hohlraum 14 aus und gelangt über die in der seitlichen Begrenzungswand 141 vorgesehenen Schlitze 1411 auch in den Zwischenraum zwischen der Unterputzdose und den die Öffnung 21 begrenzenden Rolladenkastenabschnitten. Der in diesen Zwischenraum gelangende Schaum sorgt für eine zusätzliche Befestigung der Unterputzdose in der Öffnung 21 und für eine noch bessere Wärmedämmung. Die Dichtlippen 1414 und/oder 1415 sorgen dafür, daß sich der Schaum nicht unkontrolliert ausbreiten kann. Wenn genügend Schaum in den zweiten Hohlraum eingefüllt ist, wird das zur Befüllung verwendete Rohr bzw. der zur Befüllung verwendete Schlauch aus dem zweiten Hohlraum herausgezogen. Die Tülle ist so ausgebildet, daß über diese kein Schaum aus dem zweiten Hohlraum 14 in den ersten Hohlraum 13 gelangen kann. Dies wird im betrachteten Beispiel dadurch erreicht, daß im Inneren der Tülle ein elastisch bewegbares Plättchen vorgesehen ist, welches in seiner entspannten Ausgangslage die Tülle verschließt, aber durch das zum Befüllen verwendete Rohr bzw. durch den zum Befüllen verwendeten Schlauch elastisch beiseite drückbar ist, und nach dem Herausziehen des Rohres bzw. des Schlauches wieder in seine ursprüngliche, den Durchgang durch die Tülle versperrende Stellung zurückkehrt. In der die Tülle verschließenden Stellung kann über die Tülle kein Schaum aus dem zweiten Hohlraum in den ersten Hohlraum gelangen. Die Tülle wirkt hierbei also wie ein Ventil.

Nachdem sich der Schaum verfestigt hat, wird durch diesen und den Boden 142 des zweiten Hohlraumes 14 ein Kanal gestoßen, gebohrt oder gefräst, durch welchen hindurch die in den Hohlraum 22 des Rolladenkastens 2 zu verlegende elektrische Leitung geführt werden kann. Der Kanal wird im einfachsten Fall mittels eines Schraubendrehers erzeugt, der über die im Boden 132 des ersten Hohlraumes 13 vorgesehene Öffnung 1321 in den zweiten Hohlraum 14 geführt und dann durch den Schaum und den Boden 142 des zweiten Hohlraumes 14 gedrückt wird. Der Kanal könnte aber auch unter Verwendung einer Bohrmaschine oder einer Fräse erzeugt werden. Der Durchmesser des Kanals entspricht dem Durchmesser der durch diesen zu führenden Leitung oder ist nur unwesentlich größer.

Abschließend wird die in den Hohlraum 22 des Rolladenkastens zu führende elektrische Leitung über den Kanal in den Hohlraum 22 geführt. Dabei verläuft die elektrische Leitung über die vorstehend bereits mehrfach erwähnte Tülle, welche die elektrische Leitung eng (zwischenraumfrei) umschließt.

Da der Hohlraum 22 des Rolladenkastens 2 und der erste Hohlraum durch eine dicke wärmedämmende Schicht (durch den in den zweiten Hohlraum 14 eingefüllten Schaum) voneinander getrennt sind, und da zwischen dem durch den Schaum verlaufenden Kanal und der durch diesen geführten elektrischen Leitung sowie zwischen der Tülle und der elektrischen Leitung kein oder nur ein vernachlässigbar geringer Zwischenraum vorhanden ist, kann aus dem Hohlraum 22 des Rolladenkastens 2 keine oder nur vernachlässigbar wenig Kälte und Luft in den ersten Hohlraum 13 und von dort weiter ins Gebäudeinnere gelangen.

Wie eingangs bereits erwähnt wurde, kann die beschriebene Unterputzdose auch in eine Wand eingebaut werden, ist also nicht nur für den Einbau in einen Rolladenkasten geeignet.

Wenn die beschriebene Unterputzdose in eine Wand eingebaut wird, besteht keine Notwendigkeit, daß diese einen vorderen Abschnitt mit großem Durchmesser und einen hinteren Abschnitt mit kleinerem Durchmesser aufweist. Gleichwohl kann aber auch eine wie vorstehend beschrieben ausgebildete Unterputzdose als Unterputzdose für eine normale Wand verwendet werden.

Bei Verwendung einer Unterputzdose der vorstehend beschriebenen Art als Unterputzdose für eine normale Wand kann vorgesehen werden, daß die durch den zweiten Hohlraum hindurchzuführende elektrische Leitung nicht über den Boden 142 des zweiten Hohlraumes 14, sondern über die seitliche Begrenzungswand 141 in den zweiten Hohlraum 14 hinein bzw. aus diesem hinausgelangt. Hierzu muß lediglich dafür gesorgt werden, daß der durch den Schaum verlaufende Kanal einen anderen Verlauf aufweist, und daß die seitliche Begrenzungswand 141 Schwachstellen oder herausbrechbare Elemente aufweist, die der Schwachstelle oder dem herausbrechbaren Element 1421 entsprechen.

Es besteht auch keine zwingende Notwendigkeit, daß der zweite Hohlraum 14 hinter dem ersten Hohlraum 13 angeordnet ist. Der zweite Hohlraum könnte auch seitlich neben dem ersten Hohlraum angeordnet sein, oder den ersten Hohlraum vollständig oder teilweise umlaufen.

Ferner besteht kein zwingende Notwendigkeit, den zweiten Hohlraum 14 erst nach dem Einbau in die diesen aufnehmende Wandöffnung mit wärmedämmendem Material zu befüllen. Es könnte auch vorgesehen werden, daß der zweite Hohlraum bereits während der Herstellung desselben mit wärmedämmendem Material befüllt wird, beispielsweise daß während der Herstellung der Unterputzdose ein wärmedämmender Körper wie etwa ein Polystyrol-Block, oder ein PU-Block, oder ein PUR-Block in den zweiten Hohlraum eingesetzt wird.

Unabhängig hiervon kann vorgesehen werden, daß sämtliche elektrische Leitungen, die an der Unterputzdose ankommen oder von der Unterputzdose abgehen, über den zweiten Hohlraum 14 in den ersten Hohlraum 13 gelangen.

Falls die elektrischen Leitungen, die an der Unterputzdose ankommen oder von der Unterputzdose abgehen, durch in der Wand verlegte Rohre verlaufen, kann vorgesehen werden, daß an denjenigen Stellen, an welchen die betreffenden elektrischen Leitungen in den zweiten Hohlraum eintreten oder den zweiten Hohlraum verlassen, von der Außenseite der Unterputzdose Stutzen abgehen, auf welche die Rohre aufsteckbar sind oder in welche die Rohre einsteckbar sind.

Die vorstehend beschriebenen Modifikationen der unter Bezugnahme auf die Figuren 1 bis 4 beschriebenen Unterputzdose können sich nicht nur bei der Verwendung der beschriebenen Unterputzdose als Unterputzdose für eine normale Wand als vorteilhaft erweisen; die erwähnten Modifikationen können sich auch bei Unterputzdosen für Rolladenkästen als vorteilhaft erweisen.

Unterputzdosen der vorstehend beschriebenen Art sind nach alledem universell einsetzbare Unterputzdosen mit hervorragender Wärmedämmung und minimaler Luftdurchlässigkeit.

### Bezugszeichenliste

- 1: Unterputzdose
- 1a, 1b: Hälften, aus welchen 1 zusammengesetzt ist
- 2: Rolladenkasten

- 11: vorderer Abschnitt von 1
- 12: hinterer Abschnitt von 1
- 13: erster Hohlraum
- 14: zweiter Hohlraum
- 15: Rastnase
- 16: Rastöffnung

- 21: Öffnung in 2
- 22: Hohlraum in 2
- 23: Welle

- 131: seitliche Begrenzungswand von 13
- 132: Boden von 13 und vordere Begrenzungswand von 14

- 141: seitliche Begrenzungswand von 14
- 142: Boden von 14

- 1311: aus 131 herausbrechbares Element
- 1321: Öffnung in 132

- 1411: Schlitz
- 1412: Steg
- 1413: Rippen
- 1414: Dichtlippe
- 1415: Dichtlippe
- 1421: Schwachstelle in 142 oder aus 142 herausbrechbares Element

## Patentansprüche

1. Unterputzdose für die Elektroinstallation, mit einem von vorne zugänglichen Hohlraum, in welchen von der Seite oder von hinten unter Putz verlegte elektrische Leitungen hineinführbar sind,
**dadurch gekennzeichnet,**
**daß** neben und/oder hinter dem Hohlraum ein zweiter Hohlraum vorgesehen ist, welcher derart angeordnet und bemessen ist, daß die in den ersten Hohlraum zu führenden elektrischen Leitungen zumindest teilweise über den zweiten Hohlraum in den ersten Hohlraum führbar sind.

2. Unterputzdose nach Anspruch 1,
**dadurch gekennzeichnet,**
**daß** der erste Hohlraum über eine Öffnung mit dem zweiten Hohlraum verbunden ist, und daß die über den zweiten Hohlraum in den ersten Hohlraum geführten elektrischen Leitungen über diese Öffnung in den ersten Hohlraum geführt werden.

3. Unterputzdose nach Anspruch 2,
**dadurch gekennzeichnet,**
**daß** die Öffnung ungefähr so groß ist wie die durch diese hindurchzuführenden elektrischen Leitungen.

4. Unterputzdose nach Anspruch 2,
**dadurch gekennzeichnet,**
**daß** an der Öffnung eine Tülle angebracht ist, und daß die über den zweiten Hohlraum in den ersten Hohlraum geführten elektrischen Leitungen über diese Tülle in den ersten Hohlraum geführt werden.

5. Unterputzdose nach Anspruch 5,
**dadurch gekennzeichnet,**
**daß** die Tülle die elektrischen Leitungen eng umschließt.

6. Unterputzdose nach Anspruch 1,
**dadurch gekennzeichnet,**
**daß** der zweite Hohlraum mit wärmedämmendem Material gefüllt ist oder befüllbar ist.

7. Unterputzdose nach Anspruch 6 in Verbindung mit Anspruch 2,
**dadurch gekennzeichnet,**
**daß** der zweite Hohlraum über die Öffnung mit wärmedämmendem Material befüllt wird, über welche der erste Hohlraum mit dem zweiten Hohlraum verbunden ist.

8. Unterputzdose nach Anspruch 7,
**dadurch gekennzeichnet,**
**daß** als wärmedämmendes Material ein aushärtender Schaum verwendet wird.

9. Unterputzdose nach Anspruch 8,
**dadurch gekennzeichnet,**
**daß** als wärmedämmendes Material ein PU-Schaum verwendet wird.

10. Unterputzdose nach Anspruch 8,
**dadurch gekennzeichnet,**
**daß** als wärmedämmendes Material ein PUR-Schaum verwendet wird.

11. Unterputzdose nach Anspruch 8,
**dadurch gekennzeichnet,**
**daß** der zweite Hohlraum in seinen seitlichen Begrenzungswänden Öffnungen aufweist, über welche der aushärtende Schaum in den Zwischenraum zwischen der Unterputzdose und die diese aufnehmende Wandöffnung gelangen kann.

12. Unterputzdose nach Anspruch 6,
**dadurch gekennzeichnet,**
**daß** die elektrischen Leitungen durch im wärmedämmenden Material gebildete Kanäle geführt werden.

13. Unterputzdose nach Anspruch 12,
**dadurch gekennzeichnet,**
**daß** der Durchmesser der wärmedämmenden Kanäle dem Durchmesser der durch sie geführten Leitungen entspricht.

14. Unterputzdose nach Anspruch 1,
**dadurch gekennzeichnet,**
**daß** an der Außenseite der Unterputzdose Vorsprünge vorgesehen sind, die sich im in die Wandöffnung eingesetzten Zustand der Unterputzdose mit den die Wandöffnung umgebenden Wandabschnitten verkeilen.

15. Unterputzdose nach Anspruch 14,
**dadurch gekennzeichnet,**
**daß** die Vorsprünge so ausgebildet, bemessen und angeordnet sind, daß sie ein Herausziehen der Unterputzdose aus der Wandöffnung erschweren oder verhindern.

16. Unterputzdose nach Anspruch 14,
**dadurch gekennzeichnet,**
**daß** die Vorsprünge so ausgebildet, bemessen und angeordnet sind, daß sie ein Drehen der Unterputzdose innerhalb der Wandöffnung erschweren oder verhindern.
